Europäisches Patentamt

European Patent Office

Office européen des brevets

(11) Veröffentlichungsnummer: **0 054 200**

**A1**

(12) # EUROPÄISCHE PATENTANMELDUNG

(21) Anmeldenummer: 81109864.9

(22) Anmeldetag: 25.11.81

(51) Int. Cl.³: **F 41 H 9/00**
**F 02 B 47/00**

(30) Priorität: 13.12.80 DE 3047066

(43) Veröffentlichungstag der Anmeldung:
23.06.82 Patentblatt 82/25

(84) Benannte Vertragsstaaten:
BE DE FR GB IT LU NL

(71) Anmelder: Rheinmetall GmbH
Ulmenstrasse 125
D-4000 Düsseldorf(DE)

(71) Anmelder: NICO-PYROTECHNIK Hanns-Jürgen
Diederichs GmbH & Co. KG
Bei der Feuerwerkerei 4
D-2077 Trittau Bez. Hamburg(DE)

(72) Erfinder: Krone, Uwe, Dr. rer. nat.
Schulstrasse 27-29
D-2071 Hamfelde Krs. Stormarn(DE)

(72) Erfinder: Silligmann, Karl-Heinz
Nachtigallstrasse 9a
D-4000 Düsseldorf(DE)

(74) Vertreter: Behrens, Ralf Holger, Dipl.-Phys.
in Firma Rheinmetall GmbH Ulmenstrasse 125 Postfach
6609
D-4000 Düsseldorf 1(DE)

(54) Verfahren zur zumindest zeitweiligen Ausserbetriebsetzung von Umgebungsluft ansaugenden Verbrennungskraftmaschinen.

(57) Um den Motor eines Fahrzeugs (z.B. eines gegnerischen Panzers) ausser Betrieb zu setzen, werden der Umgebungsluft den Verbrennungsvorgang inhibierende Gase, insbesondere Halogenkohlenwasserstoffe beigemischt. Als anzustrebende Konzentration sind 3-5 vol. % anzusehen.

EP 0 054 200 A1

RHEINMETALL GMBH

Düsseldorf, den 25.11.80
Bs/Sch

0054200

Akte R 748

## Verfahren zur zumindest zeitweiligen Außerbetriebsetzung von Umgebungsluft ansaugenden Verbrennungskraftmaschinen

Die Erfindung betrifft ein Verfahren zur zumindest zeitweiligen Außerbetriebsetzung von Umgebungsluft ansaugenden Verbrennungskraftmaschinen sowie eine Vorrichtung zur Durchführung dieses Verfahrens.

Aus der DE-OS 29 29 792 ist es bekannt, von Verbrennungsmaschinen angetriebene Fahrzeuge dadurch außer Funktion zu setzen, daß noch nicht ausgehärteter Plastikhartschaum in feinverteilter Form in den Bereich der Luftansaugöffnungen der Fahrzeuge gebracht wird, dort unter dem Einfluß hoher Temperaturen aushärtet und dabei durch Verstopfung der Ansaugöffnungen die Luftzufuhr unterbindet.

Dieses Verfahren ist insofern unvollkommen, als der Plastikhartschaum unmittelbar auf den Luftansaugöffnungen aufgebracht werden muß. Für die Funktionsweise ist es außerdem erforderlich, daß eine ausreichend hohe Temperatur zur Aushärtung des Schaums vorhanden ist; schließlich vergeht eine beträchtliche Zeit bis zum Aushärten des Plastikschaums.

Der Erfindung liegt die Aufgabe zugrunde, ein Verfahren zur zumindest zeitweiligen Außerbetriebsetzung von Umgebungsluft ansaugenden Verbrennungskraftmaschinen anzugeben, das diese Nachteile vermeidet. Das erfindungsgemäße Verfahren soll daher schnell wirksam werden, ohne daß es erforderlich ist, bestimmte Teile der Verbrennungskraftmaschine, insbesondere deren Luftansaugöffnungen punktgenau mit irgendeiner Substanz zu treffen.

Die Erfindung wird nachfolgend auch anhand der Zeichnung erläutert, dabei zeigt:

Fig. 1: ein erstes Ausführungsbeispiel einer Vorrichtung zur Durchführung des Verfahrens in Form eines Wurfkörpers;

Fig. 2: ein weiteres Ausführungsbeispiel einer Vorrichtung zur Durchführung des Verfahrens, welche als Wirkteil einer Rakete oder eines Geschosses ausgebildet ist.

In Verbrennungskraftmaschinen, wie Otto-Motor, Diesel-Motor oder Gasturbine findet in Anwesenheit von Sauerstoff der Luft eine Verbrennung von Kohlenwasserstoffen statt. Bei einer solchen Verbrennung handelt es sich um eine Radikalkettenreaktion mit Radikalen wie $OH^*$, $HCO^*$, $HO_2^*$. Werden nun Halogenkohlenwasserstoffe den hohen Temperaturen eines Verbrennungsvorgangs ausgesetzt, so werden diese ebenfalls unter Radikalbildung zersetzt. Wird beispielsweise das bekannte Halon 1211 ($CF_2ClBr$, Difluorchlorbrommethan) einem Verbrennungsraum zugeführt, so bilden sich die Radikale $CF_2Cl^*$, $Br^*$, $CF_2^{**}$ und $Cl^*$.

Diese Radikale reagieren mit den in der Verbrennung gebildeten Radikalen unter Kettenabbruch und führen somit zu einer Beendigung des Verbrennungsvorgangs.

Diese Erkenntnis macht sich die Erfindung zunutze, indem bei einem Verfahren zur zumindest zeitweiligen Außerbetriebsetzung von Umgebungsluft ansaugenden Verbrennungskraftmaschinen der Umgebungsluft den Verbrennungsvorgang inhibierende Gase beigemischt werden.

Als besonders zweckmäßig für dieses Verfahren haben sich Halogenkohlenwasserstoffe (Halone), vorzugsweise Difluorchlorbrommethan, erwiesen.

Das inhibierende Gas wird zweckmäßig mit etwa 3 bis 5 Vol.% der Umgebungsluft zugesetzt.

Das erfindungsgemäße Verfahren kann vorteilhaft dazu verwandt werden, Landfahrzeuge, insbesondere auch Panzerfahrzeuge, zeitweilig außer Gefecht zu setzen. Dies wird dadurch erreicht, daß durch Anreicherung der Umgebungsluft die Antriebsmittel des Landfahrzeugs, die in der Regel eine Verbrennungskraftmaschine umfassen, außer Betrieb gesetzt werden. Für diesen Anwendungsfall ist es zweckmäßig, zusammen mit dem inhibierenden Gas eine nebelerzeugende Substanz einzusetzen, welche die Orientierungsmöglichkeit der Besatzung beeinträchtigt.

Ein wesentlicher Vorteil des erfindungsgemäßen Verfahrens liegt darin, daß die Außerbetriebsetzung der Verbrennungskraftmaschine von außen erfolgt, indem die Umgebungsluft mit einem inhibierenden Gas angereichert wird, welches über die Ansaugöffnungen dem Verbrennungsort zugeleitet wird. Im Falle der Außergefechtsetzung von Landfahrzeugen, insbesondere Panzerfahrzeugen, sind Gegenmaßnahmen der Besatzung nahezu nicht möglich.

Da bereits ein sehr geringer Anteil des inhibierenden Gases in der Umgebungsluft ausreichend ist, kann das erfindungsgemäße Verfahren unter nahezu allen Witterungsbedingungen angewandt werden.

Zur Durchführung des Verfahrens ist eine Vorrichtung erforderlich, die einen das inhibierende Gas in komprimierter Form enthaltenden Hochdruckbehälter umfaßt. Dieser Hochdruckbehälter kann nach Art eines Handfeuerlöschers ausgebildet sein, der durch eine Auslösetaste in der Nachbarschaft der stillzusetzenden Verbrennungskraftmaschine in Tätigkeit gesetzt wird.

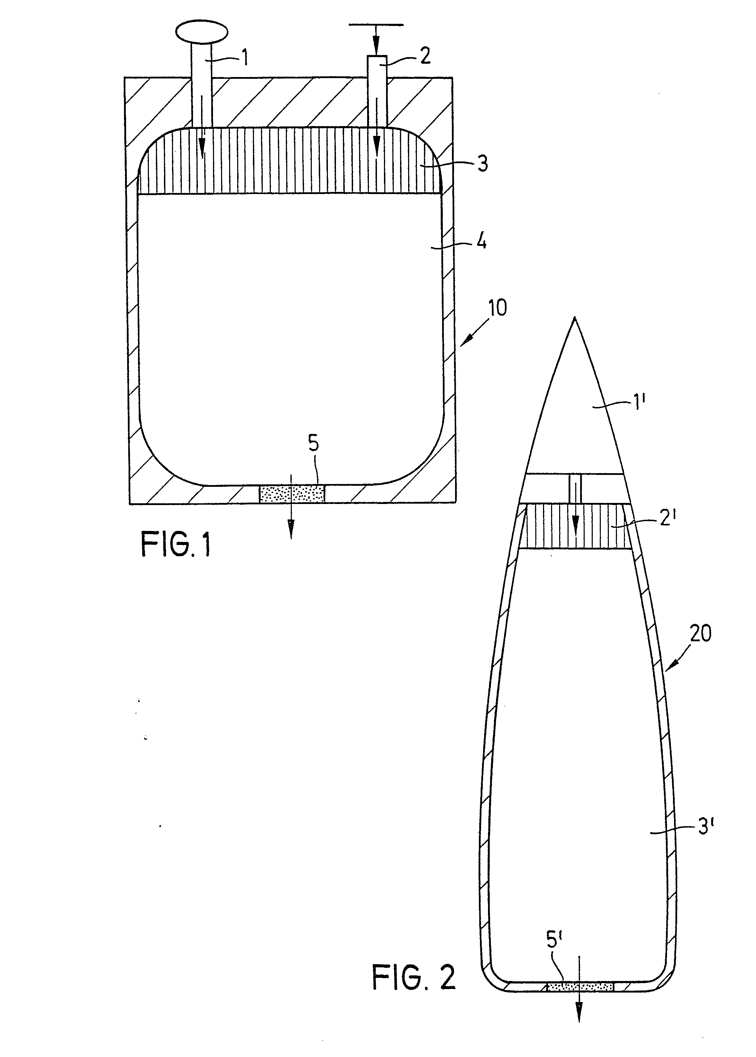

Für bestimmte Anwendungsfälle, beispielsweise auch zur Außergefechtsetzung von Landfahrzeugen, ist es dagegen zweckmäßiger, das inhibierende Gas aus örtlicher Entfernung an den Einsatzort heranzubringen. Für diesen Anwendungsfall wird die Vorrichtung zweckmäßig als Wurfkörper oder als Nutzlastteil einer Rakete oder eines Geschosses ausgebildet. Ein Ausführungsbeispiel einer als Wurfkörper ausgebildeten Vorrichtung zur Durchführung des Verfahrens wird anhand von Fig. 1 erläutert. Diese Vorrichtung umfaßt einen Hochdruckbehälter 10, der das inhibierende Gas 4 in vorzugsweise komprimierter Form enthält. Durch Abreißzündung oder Perkussionszündung eines Zünders 1 oder über eine Flammenzündung während eines Ausstoßvorgangs über den Kanal 2 wird ein Heiz- oder Gassatz 3 angezündet, der das inhibierende Gas 4 über eine als Berstscheibe oder Düse 5 ausgebildete Öffnung zwecks Anreicherung der Umgebungsluft in der Nachbarschaft der stillzusetzenden Verbrennungskraftmaschine ausbringt.

- 5 -

Eine Vorrichtung, die als Nutzlastteil einer Rakete oder
eines Geschosses ausgebildet ist, wird schematisch durch
Fig. 2 verdeutlicht. Auch hier leitet der Zünder 1' die
Anzündung des Heiz- oder Gassatzes 2' ein, der das im Behälter 20 angeordnete inhibierende Gas 3' durch eine Berstscheibe oder Düse 5' ausbringt.

Um die Ausbringung des inhibierenden Gases zu beschleunigen,
kann der Gassatz 2' so bemessen sein, daß er den Behälter
20 zerlegt.

RHEINMETALL GMBH                    Düsseldorf, den 25.11.80
                                    Bs/Sch


Akte R 748
——————————


P a t e n t a n s p r ü c h e
——————————————————————————

1. Verfahren zur zumindest zeitweiligen Außerbetriebsetzung
   von Umgebungsluft ansaugenden Verbrennungskraftmaschinen,
   d a d u r c h   g e k e n n z e i c h n e t,   daß der
   Umgebungsluft den Verbrennungsvorgang inhibierende Gase
   beigemischt werden.


2. Verfahren nach Anspruch 1,   d a d u r c h   g e k e n n -
   z e i c h n e t,  daß Halogenkohlenwasserstoffe (Halone)
   zugefügt werden.


3. Verfahren nach einem der Ansprüche 1 und 2,   d a -
   d u r c h   g e k e n n z e i c h n e t,   daß der Umgebungsluft Difluorchlorbrommethan beigemischt wird.


4. Verfahren nach einem der Ansprüche 1 bis 3,   d a -
   d u r c h   g e k e n n z e i c h n e t,   daß der Umgebungsluft 3 bis 5 Vol.% des inhibierenden Gases beigemischt werden.

5. Verfahren nach einem der Ansprüche 1 bis 4, d a - d u r c h   g e k e n n z e i c h n e t,   daß der Umgebungsluft zusätzlich zu dem inhibierenden Gas eine nebelerzeugende Substanz beigemischt wird.

6. Vorrichtung zur Durchführung des Verfahrens nach einem der Ansprüche 1 bis 5,   g e k e n n z e i c h n e t   d u r c h   einen das inhibierende Gas in komprimierter Form enthaltenden Hochdruckbehälter.

7. Vorrichtung nach Anspruch 6,   d a d u r c h   g e - k e n n z e i c h n e t,   daß die Vorrichtung als Wurfkörper oder Geschoß ausgebildet ist.

8. Verwendung des Verfahrens bzw. der Vorrichtung nach einem der Ansprüche 1 bis 7 zur Außergefechtsetzung von Landfahrzeugen, insbesondere Panzerfahrzeugen.

0054200

FIG.1

FIG. 2

## Europäisches Patentamt

## EUROPÄISCHER RECHERCHENBERICHT

| Kategorie | Kennzeichnung des Dokuments mit Angabe, soweit erforderlich, der maßgeblichen Teile | betrifft Anspruch |
|---|---|---|
| | EINSCHLÄGIGE DOKUMENTE | |
| | DE - A - 2 715 110 (TYRER et al.) | |
| Y | * Figuren 1-3; Seite 8, Absatz 1, Seiten 13-16 * | 1,2-4, 8 |
| X | -- | 6 |
| Y | US - A - 3 524 506 (WEISE) | |
| | * Zeichnung; Spalte 4, Zeilen 16-27; Spalte 1, Zeilen 52-57 * | 1 2-4 |
| | -- | |
| Y | DE - A - 1 907 122 (ROTH) | |
| | * Seite 1, Zeilen 19-23; Seite 2, Zeilen 17-22; Seite 3, Zeile 6 * | 1 2 |
| | -- | |
| Y | DE - C - 385 426 (KUTSCHER) | |
| | * Zeichnung; Seite 2, Zeilen 13-27 * | 1 |
| | -- | |
| X | US - A - 1 878 491 (GOSS) | |
| | * Insgesamt * | 6,7 |
| | -- | |
| Y | US - A - 4 194 571 (MONTE) | |
| | * Zusammenfassung; Spalte 4, Zeilen 35-37 * | 8 |
| | -- | |
| AD | DE - A - 2 929 792 (MORLOCK et al.) | |
| | ---- | |

### KLASSIFIKATION DER ANMELDUNG (Int. Cl. 3)

F 41 H 9/00
F 02 B 47/00

### RECHERCHIERTE SACHGEBIETE (Int Cl 3)

F 41 H
F 02 B
F 02 D
F 16 P
F 42 B

### KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

| | Der vorliegende Recherchenbericht wurde für alle Patentansprüche erstellt. |
|---|---|

| Recherchenort | Abschlußdatum der Recherche | Prüfer |
|---|---|---|
| Den Haag | 10-03-1982 | FISCHER |

EPA form 1503.1  06.78